# EUROPÄISCHE PATENTANMELDUNG

(11) **EP 4 375 769 A1**
(43) Veröffentlichungstag der Anmeldung: **29.05.2024**
(21) Anmeldenummer: 23204636.7
(22) Anmeldetag: 19.10.2023
(51) Int. Cl.: G05B 15/02, F24C 7/08

(54) **STEUERSYSTEM ZUM BETREIBEN EINES ERSTEN ELEKTRISCHEN HAUSHALTSGERÄTES UND EINES WEITEREN, ZWEITEN ELEKTRISCHEN HAUSHALTSGERÄTES**

(30) Priorität: 28.11.2022 BE 202205959
(71) Anmelder: Miele & Cie. KG, 33332 Gütersloh (DE)
(72) Erfinder: Carsten, Daniel, 33615 Bielefeld (DE)

(57) **Zusammenfassung**

Die Erfindung betrifft ein Steuersystem zum Betreiben eines ersten elektrischen Haushaltsgerätes (1) und eines weiteren, zweiten elektrischen Haushaltsgerätes (3), aufweisend
- eine erste Sensoreinheit (2), die ausgebildet ist, eine Bewegung eines Bauelements des ersten elektrischen Haushaltsgeräts (1) und/oder eine Bewegung eines Körperteils eines Nutzers des ersten elektrischen Haushaltsgeräts (1) zu sensieren,
- eine zweite Sensoreinheit (4), die einen Präsenz- und/oder Annährungssensor aufweist, der ausgebildet ist, eine Präsenz und/oder Annäherung des Nutzers (5) an dem oder an das zweite elektrische Haushaltsgerät (3) zu sensieren,
wobei das Steuersystem eingerichtet und ausgebildet ist, bei einer ersten Sensierung einer Bewegung eines Bauelements des ersten elektrischen Haushaltsgeräts (1) und/oder bei einer ersten Sensierung einer Bewegung eines Körperteils des Nutzers mittels der ersten Sensoreinheit (2) und bei einer zeitlich anschließenden zweiten Sensierung einer Präsenz und/oder Annäherung des Nutzers (5) an das zweite elektrische Haushaltsgerät (3) mittels der zweiten Sensoreinheit (4) innerhalb einer vorbestimmten Zeitdauer nach der ersten Sensierung Informationen und/oder eine Bedienoberfläche des ersten elektrischen Haushaltsgeräts (1) in einer Bedienanzeige des zweiten elektrischen Haushaltsgeräts (3) bereitzustellen.

## Beschreibung

Die Erfindung betrifft ein Steuersystem zum Betreiben eines ersten elektrischen Haushaltsgerätes und eines weiteren, zweiten elektrischen Haushaltsgerätes. Insbesondere betrifft die Erfindung ein Steuersystem zum Betreiben eines ersten elektrischen Haushaltsgerätes und eines weiteren, zweiten elektrischen Haushaltsgerätes, bei dem sich das erste elektrische Haushaltsgerät eine Bedienanzeige des zweiten elektrischen Haushaltsgerätsborgt. Dieser Vorgang ist unter dem Begriff "geborgtes" oder "shared Display" bekannt.

Es ist bekannt, dass die geborgte Bedienanzeige an dem zweiten elektrischen Haushaltsgerät über mehrere Bedienschritte aufgerufen werden kann, um eine Benutzerschnittstelle und/oder Informationen des ersten elektrischen Haushaltsgerätes anzeigen zu können. Dazu muss der Nutzer jedoch in einem Menü des zweiten elektrischen Haushaltsgeräts das erste elektrische Haushaltsgerät auswählen, um Informationen zu erhalten oder es bedienen zu können. Das kostet Zeit und ist weder intuitiv noch komfortabel.

Es besteht daher ein Bedarf an einer einfacheren und komfortableren Aktivierung des geborgten Displays, so dass eine Anzeige von Informationen und/oder ein Steuern des ersten elektrischen Haushaltsgeräts an dem zweiten elektrischen Haushaltsgerät zu einem von einem Nutzer der beiden elektrischen Haushaltsgeräte gewünschten Zeitpunkt und darüber hinaus in einem intuitiven Bedienfluss ermöglicht wird.

Der Erfindung stellt sich somit das Problem, ein Steuersystem bereitzustellen, das eingerichtet und ausgebildet ist, einem Nutzer eine Information oder eine Bedienoberfläche für ein erstes elektrisches Haushaltsgerät über eine Bedienanzeige eines weiteren, zweiten elektrischen Haushaltsgerät bereitzustellen, die der Nutzer intuitiv und schnell initiieren kann.

Erfindungsgemäß wird dieses Problem durch ein Steuersystem mit den Merkmalen des Patentanspruchs 1 gelöst. Vorteilhafte Ausgestaltungen und Weiterbildungen der Erfindung ergeben sich aus den nachfolgend erläuterten Unteransprüchen.

Die mit der Erfindung erreichbaren Vorteile bestehen neben einer intuitiv initiierten Bereitstellung einer geborgten Bedienanzeige darin, dass der Nutzer die geborgte Bedienanzeige komfortabel nutzen kann. Die Bereitstellung erfordert wenige Bedienschritte. Dadurch wird Zeit eingespart und der Bedienkomfort erhöht. Zudem benötigt das erste elektrische Haushaltsgerät keine eigene Bedienanzeige oder nur eine vergleichsweise simple, kostengünstige Bedienanzeige. Das Steuersystem stellt kontextbasiert und intuitiv Informationen oder die gesamte Benutzerschnittstelle von dem ersten elektrischen Haushaltsgerät an dem zweiten elektrischen Hausgerät bereit, sobald es der Nutzer durch sein Verhalten zu erkennen gibt. Dies führt zu einem komfortablen und intuitiven Bedienungsfluss und stellt eine so genannte "smarte Assistenzfunktion" dar.

Weitere Vorteile bieten sich ebenfalls, wenn das Borgen und/oder Verborgen der Bedienanzeige an mehreren Haushaltsgeräten möglich ist, beispielsweise wenn mehrere Personen gleichzeitig in dem Nutzungsraum sind, in dem sich die mehreren Haushaltsgeräte befinden. Wenn die geborgte Bedienanzeige an zwei vorhandenen zweiten elektrischen Haushaltsgeräten aufgerufen werden kann, so aktiviert sich die Bedienanzeige an jenem, an das sich der Nutzer annähert. Sollte sich schon eine zweite Person an einem dieser beiden zweiten elektrischen Haushaltsgeräte befinden, so wird dies bereits durch die Präsenzerkennung detektiert. Eine Annäherung innerhalb der vorbestimmten Zeitdauer nach Aktivierung des Bedienwunsches an dem ersten elektrischen Haushaltsgerät kann dann nicht mehr erfolgen. Der Nutzer mit dem Bedienwunsch kann sich nur noch an ein freies zweites elektrisches Haushaltsgerät annähern. Diese Annäherung wird erkannt, und die gewünschte Information oder Bedieneinheit wird an diesem zweiten elektrischen Haushaltsgerät angezeigt. Der zweite Nutzer, der schon eines der möglichen zweiten elektrischen Haushaltsgeräte besetzt hat, wird dabei nicht gestört. Ein ungewolltes Aufrufen des geborgten Displays ist für den zweiten Nutzer damit ausgeschlossen. Der erste Nutzer, der den Wunsch hat, ein geborgtes Display zu benutzen kann sich dem freien zweiten elektrischen Haushaltsgerät, an dem dies möglich ist, annähern und findet bei Erkennung seiner Präsenz, innerhalb der vorbestimmten Zeitdauer eine Information oder die Bedienoberfläche des ersten elektrischen Haushaltsgerätes vor.

Die Erfindung betrifft ein Steuersystem zum Betreiben eines ersten elektrischen Haushaltsgerätes und eines weiteren, zweiten elektrischen Haushaltsgerätes, aufweisend
- eine erste Sensoreinheit, die ausgebildet ist, eine Bewegung eines Bauelements des ersten elektrischen Haushaltsgeräts und/oder eine Bewegung eines Körperteils eines Nutzers des ersten elektrischen Haushaltsgeräts zu sensieren,
- eine zweite Sensoreinheit, die einen Präsenz- und/oder Annährungssensor aufweist, der ausgebildet ist, eine Präsenz und/oder Annäherung des Nutzers an dem oder an das zweite elektrische Haushaltsgerät zu sensieren,
wobei das Steuersystem eingerichtet und ausgebildet ist, bei einer ersten Sensierung einer Bewegung eines Bauelements des ersten elektrischen Haushaltsgeräts und/oder bei einer ersten Sensierung einer Bewegung eines Körperteils des Nutzers mittels der ersten Sensoreinheit und bei einer zeitlich anschließenden zweiten Sensierung einer Präsenz und/oder Annäherung des Nutzers an das zweite elektrische Haushaltsgerät mittels der zweiten Sensoreinheit innerhalb einer vorbestimmten Zeitdauer nach der ersten Sensierung Informationen und/oder eine Bedienoberfläche des ersten elektrischen Haushaltsgeräts in einer Bedienanzeige des zweiten elektrischen Haushaltsgeräts bereitzustellen.

Die Erfindung stellt durch eine kontextbasierte Informationsauswertung mittels einer Sensorfusion eine Information oder eine Bedieneinheit des ersten elektrischen Haushaltsgeräts an der Bedienanzeige des zweiten elektrischen Haushaltsgeräts bereit. Das erste elektrische Haushaltsgerätgerät, das gesteuert werden soll oder dessen Informationen abgerufen werden sollen, weist eine erste Sensoreinheit auf, die der Nutzer bewusst und/oder unbewusst aktivieren kann. Das zweite elektrische Haushaltsgerät weist die Bedienanzeige auf, auf der die Informationen oder die Bedienoberfläche angezeigt werden soll, und weist weiterhin eine zweite Sensoreinheit auf, die die Annäherung und/oder die Präsenz des Nutzers erkennt. Das bewusste und/oder unbewusste Aktivieren der ersten Sensoreinheit meldet den Wunsch des Nutzers, dass er dieses bedienen möchte. Erst die Erkennung des Nutzers an dem zweiten elektrischen Haushaltsgerät innerhalb der vorbestimmten Zeitdauer erzeugt den Kontext und bestätigt den tatsächlichen Wunsch das erste elektrische Haushaltsgerät über die Bedieneinheit des zweiten elektrischen Haushaltsgeräts zu bedienen oder Informationen angezeigt zu bekommen.

Unter einer Bewegung eines Körperteils ist eine Bewegung eines Körperglieds wie ein Arm oder Bein usw. einschließlich einer Bewegung der Lippen zu verstehen, die z.B. indirekt über Schallerkennung detektiert werden kann. Beispielsweise kann auch ein Klopfen und/oder ein Sprechen des Nutzers sensiert werden. Dabei kann die erste Sensoreinheit zur Sensierung der Bewegung des Körperglieds an dem ersten elektrischen Haushaltsgerät ausgebildet sein oder ausgebildet, sein die Bewegung des Körperglieds an einem anderen Ort zu sensieren. Beispielsweise kann die erste Sensoreinheit auch einer Möbelfront zugeordnet sein, in die das erste elektrische Haushaltsgerät integriert ist.

Eine Bewegung eines Bauelements kann ein Schließen einer Tür des ersten elektrischen Haushaltsgeräts, ein Einschieben von Körben als Bauelement eines Geschirrspülers als das erste elektrische Haushaltsgerät oder Backblechs als Bauelement eines Backofens als das erste elektrische Haushaltsgerät usw. sein.

Die Informationen können Geräteinformationen umfassen. Beispielsweise kann bei einem ein Programm durchführenden ersten elektrischen Haushaltsgerät eine (Rest-)Laufzeitdauer angezeigt werden, die das erste elektrische Haushaltsgerät zur Durchführung des Programms benötigt.

In einer bevorzugten Ausführungsform ist das Steuersystem eingerichtet und ausgebildet, eine Einstellung von Parametern des ersten elektrischen Haushaltsgeräts über die in der Bedienanzeige des zweiten elektrischen Haushaltsgeräts bereitgestellten Bedienoberfläche zu ermöglichen und über die Bedienoberfläche eingestellte Parameter und/oder aus den eingestellten Parametern abgeleitete Prozessparameter an das erste elektrische Haushaltsgerät zu senden. Dadurch ist das erste elektrische Haushaltsgerät über das zweite elektrische Haushaltsgerät bedienbar. Das Bedienen kann ein Öffnen einer Tür des ersten elektrischen Haushaltsgeräts und/oder ein Aktivieren eines für dieses erste elektrische Haushaltsgerät implementierten Programms sein, das das erste elektrische Haushaltsgerät ausführen soll.

Die erste Sensoreinheit ist bevorzugt ausgebildet, vom Nutzer bewusst und/oder unbewusst aktiviert zu werden. Bevorzugte Sensoren zur bewussten Aktivierung des Bedienwunsches an dem ersten elektrischen Haushaltsgerät sind haptische Sensor- und Bedienelemente oder berührungslose Gestensensoren. Eine unbewusste Aktivierung des Bedienwunsches schließt bevorzugt das Erkennen eines Benutzungsschrittes ein wie beispielsweise das Erkennen des Korbeinschiebens im Falle eines Geschirrspülers als das erste elektrische Haushaltsgerät oder das Schließen einer Tür des ersten elektrischen Haushaltsgeräts und das Erkennen durch einen Türkontakt des ersten elektrischen Haushaltsgeräts. Eine weitere Möglichkeit zur bewussten Aktivierung der ersten Sensoreinheit schließt bevorzugt das Bedienen oder Benennen des ersten elektrischen Haushaltsgerätes über einen Sprachassistenten der ersten Sensoreinheit ein, der den Kontext an das Steuersystem sendet.

Bevorzugt weist die erste Sensoreinheit einen Hall-Sensor, eine berührungssensitive Sensorik, bevorzugt kapazitiv, per Drucksensor, eine berührungslose Sensorik, bevorzugt eine Radarsensorik, oder einen Beschleunigungssensor (z.B. zur Sensierung von Klopfbewegungen) auf. Der Hall-Sensor kann z.B. ausgebildet sein, eine Bewegung des entsprechend ausgerüsteten Bauelements des ersten elektrischen Haushaltsgeräts zu sensieren. Die erste Sensoreinheit ist insbesondere unbewusst aktivierbar, wenn sie ausgebildet ist, eine Bewegung eines Bauelements des ersten elektrischen Haushaltsgeräts zu sensieren. Die erste Sensoreinheit ist insbesondere bewusst aktivierbar, wenn sie ausgebildet ist, eine Bewegung eines Körperteils eines Nutzers des ersten elektrischen Haushaltsgeräts zu sensieren, denn in diesem Fall führt der Nutzer eine wissentliche Bewegung wie ein Klopfen oder ein Sprechen aus, um von der ersten Sensoreinheit sensiert zu werden.

In einer bevorzugten Ausführungsform weist die zweite Sensoreinheit mindestens einen Sensor auf, der ausgewählt ist aus der Gruppe: Infrarot-Sensor, Time-of-Flight-Sensor, Lidar-Sensor, Radarsensor, Kamerasensor, Schallsensor, Beschleunigungssensor oder berührungssensitiver Sensor. Diese Sensoren eignen sich für eine Präsenz- und/oder Annäherungs-Sensierung.

Bevorzugt ist oder sind das erste elektrische Haushaltsgerät und/oder das zweite elektrische Haushaltsgerät ein Kochfeld, eine Dunstabzugshaube, ein Backofen, ein Dampfgarer, ein Kaffeevollautomat, ein Pizzaofen, eine Pizzaschublade, ein Herd, eine Mikrowelle, ein Kühlschrank, ein Geschirrspüler, ein Waschautomat, ein Trockenautomat und/oder deren Kombinationen. Jedes dieser Geräte kann als erstes elektrisches Haushaltsgerät oder zweites elektrisches Haushaltsgerät in Abhängigkeit von seiner Ausstattung insbesondere der Ausgestaltung seiner Bedienanzeige dienen. Mit der Formulierung "das erste elektrische Haushaltsgerät und/oder das zweite elektrische Haushaltsgerät" ist gemeint, dass beide Geräte jeweils als eines dieser Geräte ausgebildet sein können und dabei einer gleichen oder unterschiedlichen Gerätekategorie angehören können. Die beiden Geräte können z.B. beide als separate Backöfen ausgebildet sein oder eines der Geräte kann z.B. als Backofen ausgebildet sein, während das andere Gerät als Dampfgarer ausgebildet ist. Unter dem Ausdruck "elektrisches Haushaltsgerät" ist ein elektrisches Gerät zu verstehen, dass üblicherweise in einem Privathaushalt nutzbar ist; es kann sich aber auch um ein in einem gewerblichen Umfeld genutztes Gerät handeln.

In einer bevorzugten Ausführungsform ist das Steuersystem ausgebildet, die in der Bedieneinheit bereitgestellte Information oder Bedienoberfläche bei Sensierung eines Skippens durch die zweite Sensoreinheit auszublenden. Ein irrtümliches Aufrufen der Information oder der Bedienoberfläche wird damit verworfen. Das Skippen kann der Nutzer beispielsweise durch Betätigen einer vorbestimmten Taste oder einer Rücktaste oder durch Ausführen einer (Weg-)Wischgeste bewirken. Alternativ oder zusätzlich bevorzugt ist das Steuersystem ausgebildet, die in der Bedieneinheit bereitgestellte Information oder Bedienoberfläche nach einem Timeout auszublenden. Damit kann ein irrtümliches Aufrufen der Information oder der Bedienoberfläche durch Nichtnutzung verworfen werden.

Das erste elektrische Haushaltsgerät kann ein Haushaltsgerät ohne Bedienanzeige wie ein Display z.B. ein VI-Gerät sein. Alternativ kann das erste elektrische Haushaltsgerät eine Bedienanzeige aufweisen. Das zweite elektrische Haushaltsgerät weist bevorzugt eine Bedienanzeige mit einem Touchscreen auf. Die Bedienanzeige des zweiten elektrischen Haushaltsgeräts ist bevorzugt komfortabler und höherwertiger als eine Bedienanzeige des ersten Haushaltsgeräts ausgestaltet, wenn das erste elektrischen Haushaltsgerät eine Bedienanzeige aufweist.

Das Steuersystem kann weiterhin zum Betreiben einer Vielzahl an ersten elektrischen Haushaltsgeräten und weiteren, zweiten elektrischen Haushaltsgeräten ausgebildet sein. D.h., die Bedienanzeige von zweiten elektrischen Haushaltsgeräten kann von mehreren ersten elektrischen Haushaltsgeräten genutzt werden, so dass mehrere erste elektrische Haushaltsgeräte dadurch bedient werden können. Alternativ oder zusätzlich können mehrere zweite elektrische Haushaltsgeräte zum Bedienen eines oder mehrerer erster elektrischer Haushaltsgeräte benutzt werden. Dadurch können mehrere Nutzer gleichzeitig verschiedene geborgte Displays aufrufen.

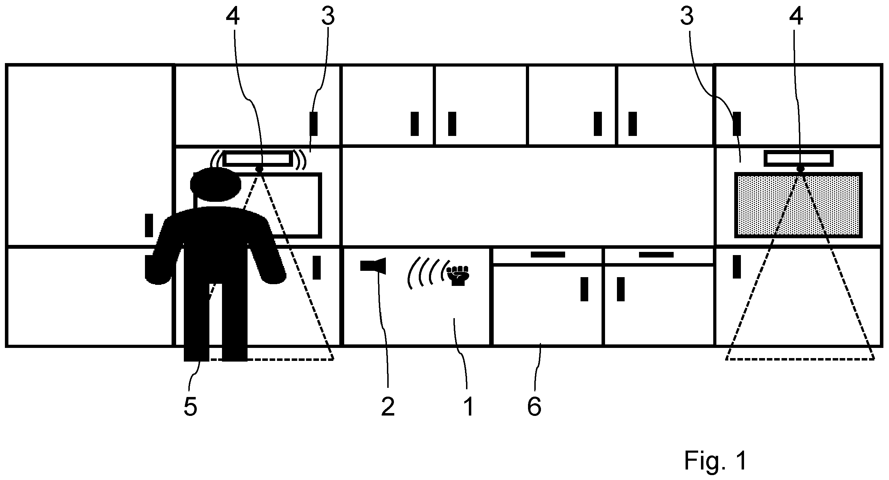

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: eine skizzierte Darstellung einer Möbelfront mit einem erfindungsgemäßen Steuersystem.

Fig 1 zeigt eine skizzenhafte Darstellung einer Möbelfront, beispielsweise in einer Küche mit mehreren elektrischen Haushaltsgeräten, in die ein erfindungsgemäßes Steuersystem integriert ist. Die Möbelfront 6 weist ein Steuersystem zum Betreiben eines ersten elektrischen Haushaltsgerätes 1 und zwei weiteren, zweiten elektrischen Haushaltsgeräten 3 auf. Es weist eine erste Sensoreinheit 2 auf, die an dem ersten elektrischen Haushaltsgerät 1 angeordnet ist und ausgebildet ist, eine Bewegung eines Bauelements (nicht gezeigt) des ersten elektrischen Haushaltsgeräts 1 und/oder eine Bewegung eines Körperteils eines Nutzers 5 des ersten elektrischen Haushaltsgeräts 1 zu sensieren. Wie schematisch angedeutet, weist die erste Sensoreinheit 2 einen Sensor auf, der ausgebildet ist, ein Klopfgeräusch des Nutzers 5 an dem ersten elektrischen Haushaltsgerät 1 zu sensieren. Das Steuersystem weist ferner zwei zweite Sensoreinheiten 4 auf, die jeweils einen Präsenz- und/oder Annährungssensor aufweisen, der jeweils ausgebildet sind, eine Präsenz und/oder Annäherung des Nutzers 5 an dem zweiten elektrischen Haushaltsgerät 3 zu sensieren, dem dieser Präsenz- und/oder Annährungssensor zugeordnet ist.

Das Steuersystem ist eingerichtet und ausgebildet, bei einer ersten Sensierung einer Bewegung eines Bauelements des ersten elektrischen Haushaltsgeräts 1 und/oder bei einer ersten Sensierung einer Bewegung eines Körperteils des Nutzers 5 mittels der ersten Sensoreinheit 2 und bei einer zeitlich anschließenden zweiten Sensierung einer Präsenz und/oder Annäherung des Nutzers 5 an eines der zweiten elektrischen Haushaltsgeräte 3 mittels der zweiten Sensoreinheiten 4 innerhalb einer vorbestimmten Zeitdauer nach der ersten Sensierung Informationen und/oder eine Bedienoberfläche des ersten elektrischen Haushaltsgeräts 1 in einer Bedienanzeige des zweiten elektrischen Haushaltsgeräts 3 bereitzustellen. Dazu wurde von der zweiten Sensoreinheit 4 die Annäherung und/oder die Präsenz des Nutzers 5 sensiert.

Gemäß Fig. 1 sensiert die in Fig. 1 links gezeigte der beiden Sensoreinheiten 4 die Präsenz des Nutzers 5 vor dem in Fig. 1 links gezeigten zweiten elektrischen Haushaltsgerät 3, nachdem der Nutzer 5 an das erste elektrische Haushaltsgerät 1 geklopft hat. Daher werden Informationen und/oder eine Bedienoberfläche des ersten elektrischen Haushaltsgeräts 1 in der Bedienanzeige des in Fig. 1 links gezeigten zweiten elektrischen Haushaltsgeräts 3 bereitgestellt. An dem in Fig. 1 recht gezeigten zweiten elektrischen Haushaltsgerät 4 werden jedoch keine Informationen oder eine Bedienoberfläche des ersten elektrischen Haushaltsgeräts 1 in der Bedienanzeige des in Fig. 1 rechts gezeigten zweiten elektrischen Haushaltsgeräts 3 bereitgestellt, weil die ihm zugeordnete Sensoreinheit 4 keine Präsenz oder Annäherung des Nutzers 5 innerhalb der vorbestimmten Zeitdauer nach dem Klopfen des Nutzers 5 auf das erste elektrische Haushaltsgerät 1 sensieren konnte.

### Bezugszeichenliste

- 1: erstes elektrisches Haushaltsgerät
- 2: erste Sensoreinheit
- 3: zweites elektrisches Haushaltsgerät
- 4: zweite Sensoreinheit
- 5: Nutzer
- 6: Möbelfront

## Patentansprüche

1. Steuersystem zum Betreiben eines ersten elektrischen Haushaltsgerätes (1) und eines weiteren, zweiten elektrischen Haushaltsgerätes (3), aufweisend
- eine erste Sensoreinheit (2), die ausgebildet ist, eine Bewegung eines Bauelements des ersten elektrischen Haushaltsgeräts (1) und/oder eine Bewegung eines Körperteils eines Nutzers (5) des ersten elektrischen Haushaltsgeräts (1) zu sensieren,
- eine zweite Sensoreinheit (4), die einen Präsenz- und/oder Annährungssensor aufweist, der ausgebildet ist, eine Präsenz und/oder Annäherung des Nutzers (5) an dem oder an das zweite elektrische Haushaltsgerät (3) zu sensieren,
wobei das Steuersystem eingerichtet und ausgebildet ist, bei einer ersten Sensierung einer Bewegung eines Bauelements des ersten elektrischen Haushaltsgeräts (1) und/oder bei einer ersten Sensierung einer Bewegung eines Körperteils des Nutzers mittels der ersten Sensoreinheit (2) und bei einer zeitlich anschließenden zweiten Sensierung einer Präsenz und/oder Annäherung des Nutzers (5) an das zweite elektrische Haushaltsgerät (3) mittels der zweiten Sensoreinheit (4) innerhalb einer vorbestimmten Zeitdauer nach der ersten Sensierung Informationen und/oder eine Bedienoberfläche des ersten elektrischen Haushaltsgeräts (1) in einer Bedienanzeige des zweiten elektrischen Haushaltsgeräts (3) bereitzustellen.

2. Steuersystem nach Anspruch 1, **dadurch gekennzeichnet, dass** das Steuersystem eingerichtet und ausgebildet ist, eine Einstellung von Parametern des ersten elektrischen Haushaltsgeräts (1) über die in der Bedienanzeige des zweiten elektrischen Haushaltsgeräts (3) bereitgestellten Bedienoberfläche zu ermöglichen und über die Bedienoberfläche eingestellte Parameter und/oder aus den eingestellten Parametern abgeleitete Prozessparameter an das erste elektrische Haushaltsgerät (1) zu senden.

3. Steuersystem nach Anspruch 1 oder 2, **dadurch gekennzeichnet, dass** die erste Sensoreinheit (1) einen Hall-Sensor, eine berührungssensitive Sensorik, bevorzugt kapazitiv, per Drucksensor, eine berührungslose Sensorik, bevorzugt eine Radarsensorik, oder einen Beschleunigungssensor aufweist.

4. Steuersystem nach einem der vorangehenden Ansprüche, **dadurch gekennzeichnet, dass** die zweite Sensoreinheit (4) mindestens einen Sensor aufweist, der ausgewählt ist aus der Gruppe: Infrarot-Sensor, Time-of-Flight-Sensor, Lidar-Sensor, Radarsensor, Kamerasensor, Schallsensor, Beschleunigungssensor oder berührungssensitiver Sensor.

5. Steuersystem nach einem der vorangehenden Ansprüche, **dadurch gekennzeichnet, dass** das erste elektrische Haushaltsgerät (1) und/oder das zweite elektrische Haushaltsgerät (3) ein Kochfeld, eine Dunstabzugshaube, ein Backofen, ein Dampfgarer, ein Kaffeevollautomat, ein Pizzaofen, eine Pizzaschublade, ein Herd, eine Mikrowelle, ein Kühlschrank, ein Geschirrspüler, ein Waschautomat, ein Trockenautomat und/oder deren Kombinationen ist oder sind.

6. Steuersystem nach einem der vorangehenden Ansprüche, **dadurch gekennzeichnet, dass** es ausgebildet ist, die in der Bedieneinheit bereitgestellte Information oder Bedienoberfläche bei Sensierung eines Skippens durch die zweite Sensoreinheit (4) und/oder nach einem Timeout auszublenden.
